# EUROPÄISCHE PATENTANMELDUNG

(11) **EP 4 686 693 A1**
(43) Veröffentlichungstag der Anmeldung: **04.02.2026**
(21) Anmeldenummer: 25187190.1
(22) Anmeldetag: 03.07.2025
(51) Int. Cl.: B66F 9/06, B66F 9/075, B62D 15/02

(54) **GABELSTAPLER, INSBESONDERE AUTONOMER ODER AUTOMATISIERTER GABELSTAPLER**

(30) Priorität: 30.07.2024 DE 102024121642
(71) Anmelder: Linde Material Handling GmbH, 63743 Aschaffenburg (DE)
(72) Erfinder: Schadt, Lukas, 64747 Breuberg (DE); Hanke, Mark, 63739 Aschaffenburg (DE)
(74) Vertreter: Patentship Patentanwaltgesellschaft

(57) **Zusammenfassung**

Die Erfindung betrifft einen Gabelstapler (1), insbesondere autonomer oder automatisierter Gabelstapler, mit einem Fahrzeugkörper (2), einer Antriebsachse (7) und einer mindestens ein gelenktes Rad (11a; 11b) umfassenden Lenkachse (10), wobei der Gabelstapler (1) mit einer Odometrieanlage (30) zur Bestimmung der Position und Orientierung des Gabelstaplers (1) versehen ist, die eine Odometriesensorik (31) umfasst. Die Odometriesensorik (31) umfasst mindestens einen an der Lenkachse (10) angeordneten, die Raddrehzahl und/oder die Radumdrehungen des gelenkten Rades (11a; 11b) erfassenden Drehzahlsensor (32a; 32b) und/oder einen an der Lenkachse (10) angeordneten, den Lenkwinkel des gelenkten Rades (11a; 11b) erfassenden Lenkwinkelsensor (33).

## Beschreibung

Die Erfindung betrifft einen Gabelstapler, insbesondere autonomer oder automatisierter Gabelstapler, mit einem Fahrzeugkörper, einer Antriebsachse und einer mindestens ein gelenktes Rad umfassenden Lenkachse, wobei der Gabelstapler mit einer Odometrieanlage zur Bestimmung der Position und Orientierung des Gabelstaplers versehen ist, die eine Odometriesensorik umfasst.

Autonome oder automatisierte Gabelstapler sind mit einer Odometrieanlage versehen, mit der die Position und Orientierung des Gabelstaplers bestimmt werden kann. Damit kann ein autonomer oder automatisierter Gabelstapler selbstständig navigieren und eine Fahrwegplanung ausführen. Die Odometrieanlage umfasst hierzu eine entsprechende Odometriesensorik, die mit hoher Auflösung, hoher Genauigkeit, hoher Zuverlässigkeit und hoher Sicherheit entsprechende Odemetriedaten des Gabelstaplers erfassen können.

Bei automatisierten bzw. autonomen Gabelstaplern mit einer automatisierten bzw. autonomen Fortbewegung des Gabelstaplers sind als Odometriedaten, die mit der Odometriesensorik erfasst werden, die Erfassung der Fahrgeschwindigkeit bzw. der Fahrstrecke und des Lenkwinkels erforderlich. Mit diesen Odometriedaten kann einerseits eine Anpassung eines Personenschutzsystem an den aktuellen Fahrzustand des Gabelstaplers durchgeführt werden und anderseits eine Schätzung der zurückgelegten Fahrstrecke des Gabelstaplers und eine Schätzung der Fahrzeugposition und der Fahrzeugorientierung des Gabelstaplers durchgeführt werden.

Bei automatisierten bzw. autonomen Gabelstaplern mit einer automatisierten bzw. autonomen Fortbewegung des Gabelstaplers werden hohe Anforderungen an die Genauigkeit und an die Sicherheit der Odometriesensorik gestellt. Bekannte Odometriesensoriken weisen einen hohen Bauraumbedarf auf und benötigen einen Einbauraum von mindestens ca. 6cmx6cmx6cm im Gabelstapler. Aufgrund des hohen Bauraumbedarfs ist die Integration einer bekannten Odometriesensorik bei autonomen bzw. automatisierten Gabelstaplern schwierig. Als wichtige Anforderung ist hierbei insbesondere anzusehen, dass die Odometriesensorik an dem autonomen bzw. automatisierten Gabelstapler zu keiner Zunahme der Außenabmessungen des Gabelstaplers führen soll.

Der vorliegenden Erfindung liegt die Aufgabe zugrunde, einen Gabelstapler der eingangs genannten Gattung zur Verfügung zu stellen, der in einfacher Weise mit der Odometriesensorik ausgerüstet werden kann.

Diese Aufgabe wird erfindungsgemäß dadurch gelöst, dass die Odometriesensorik mindestens einen an der Lenkachse angeordneten, die Raddrehzahl und/oder die Radumdrehungen des gelenkten Rades erfassenden Drehzahlsensor und/oder einen an der Lenkachse angeordneten, den Lenkwinkel des gelenkten Rades erfassenden Lenkwinkelsensor umfasst.

Gemäß der Erfindung wird mit dem Drehzahlsensor an der Lenkachse die Raddrehzahl bzw. die Radumdrehungen des gelenkten Rades an der Lenkachse erfasst. Da das gelenkte Rad bei diesem Staplertyp ein nicht angetriebenes Rad ist, ist der Schlupf, welcher den Zusammenhang zwischen Fahrgeschwindigkeit und Raddrehzahl verfälscht, deutlich geringer. Dadurch kann die Fahrzeugposition mit hoher Genauigkeit erfasst werden.

Gemäß der Erfindung wird mit dem Lenkwinkelsensor an der Lenkachse der Lenkwinkel des gelenkten Rades erfasst. An der Lenkachse ist ausreichend freier Bauraum vorhanden, der den Anbau eines großbauenden, den Anforderungen an die Odometriesensorik erfüllenden Lenkwinkelsensors ermöglicht, ohne die Außenabmessungen des Gabelstaplers zu vergrößern.

Gemäß einer vorteilhaften Ausgestaltungsform der Erfindung weist die Lenkachse zwei lenkbare Räder auf, wobei jedem gelenkten Rad ein Drehzahlsensor zugeordnet ist. Somit werden an beiden gelenkten Räder mit einem entsprechenden Drehzahlsensor die Raddrehzahl und/oder die Radumdrehungen des entsprechenden gelenkten Rades erfasst. Hierdurch kann die Genauigkeit der Positionserfassung des Gabelstaplers in einfacher Weise erhöht werden.

Gemäß einer vorteilhaften Ausgestaltungsform der Erfindung weist die Lenkachse einen Lenkachskörper auf, an dem mindestens ein um eine vertikale Schwenkachse verschwenkbaren Achsschenkel angeordnet ist, wobei an dem Achsschenkel fahrzeugaußenseitig eine Radnabe, an der das gelenkte Rad befestigbar ist, um eine horizontale Drehachse drehbar gelagert ist, wobei an dem Achsschenkel fahrzeuginnenseitig der Drehzahlsensor angeordnet ist. Hierdurch wird eine Anordnung und Befestigung des Drehzahlsensors an dem Achsschenkel der Lenkachse ermöglicht ohne die Außenabmessungen des Gabelstaplers zu vergrößern. Die Begriffe fahrzeuginnenseitig und fahrzeugaußenseitig werden auf die Geradeausfahrtstellung des Achsschenkels bezogen, wobei die fahrzeugaußenseitige Seite des Achsschenkels in dessen Geradeausfahrtstellung der Fahrzeugaußenseite zugewandt ist und die die fahrzeuginnenseitige Seite des Achsschenkels in dessen Geradeausfahrtstellung der Fahrzeuginnenseite zugewandt ist.

Gemäß einer vorteilhaften Ausgestaltungsform der Erfindung ist der Achsschenkel mit einer koaxial zur horizontalen Drehachse angeordneten Durchgangsbohrung versehen, wobei in der Durchgangsbohrung eine Welle drehbar angeordnet ist, die mit der Radnabe drehgekoppelt ist und mit dem Drehzahlsensor in Wirkverbindung steht. Die Rotationsbewegung der Radnabe und somit des an der Radnabe befestigten gelenkten Rades wird auf die Welle übertragen. Die Welle ist durch die Durchgangsbohrung im Achsschenkel auf die fahrzeugsinnenseitige Seite des Achsschenkels geführt und dort mit dem an der die fahrzeugsinnenseitige Seite des Achsschenkels angeordneten Drehzahlsensor verbunden. Mit einer derartigen in einer Durchgangsbohrung des Achsschenkels angeordneten Welle kann bei geringem Bauaufwand die Drehbewegung und somit die Rotationsbewegung des gelenkten Rades von der fahrzeugaußenseitigen Seite des Achsschenkels auf den an der fahrzeugsinnenseitigen Seite des Achsschenkels angeordneten Drehzahlsensors übertragen werden.

Gemäß einer vorteilhaften Ausgestaltungsform der Erfindung ist der Drehzahlsensor koaxial zu der horizontalen Drehachse am Achsschenkel angeordnet. Hierdurch kann in einfacher Weise die Drehbewegung der Welle von dem Drehzahlsensor der Odometriesensorik erfasst werden ohne zusätzliche Getriebeeinrichtungen zu benötigen.

Gemäß einer vorteilhaften Ausgestaltungsform der Erfindung ist an dem Achsschenkel eine Abdeckung angeordnet, innerhalb der der Drehzahlsensor und eine mit dem Drehzahlsensor verbundene Verkabelung angeordnet ist. Da bei dem erfindungsgemäßen Gabelstapler der an der fahrzeugsinnenseitigen Seite des Achsschenkels angebrachte Drehzahlsensor bei einer Lenkbewegungen des Achsschenkels mitbewegt, kann mit der Abdeckung, innerhalb der der Drehzahlsensor mit seiner Verkabelung angeordnet ist, auf einfache und sichere Weise eine vor mechanischen Beschädigungen und Verschmutzungen geschützte Anordnung des Drehzahlsensors erzielt werden.

Gemäß einer vorteilhaften Ausgestaltungsform der Erfindung ist der Lenkwinkelsensor an dem Lenkachskörper angeordnet und ausgebildet, den Lenkwinkel des Achsschenkels um die vertikale Schwenkachse zu erfassen. Mit dem Lenkwinkelsensor der Odometriesensorik kann hierdurch in einfacher Weise der Lenkwinkel des Achsschenkels und somit der Lenkwinkel des gelenkten Rades erfasst werden.

Gemäß einer vorteilhaften Ausgestaltungsform der Erfindung ist der Achsschenkel mit einem Lenkhebel, der mit einem Lenkantrieb trieblich verbunden ist, drehfest gekoppelt, wobei der Lenkwinkelsensor zur Erfassung des Lenkwinkels des Achsschenkels mit dem Lenkhebel in Wirkverbindung steht. Hierdurch kann eine bauraumgünstige Anordnung des Lenkwinkelsensors an der Lenkachse erzielt werden.

Gemäß einer vorteilhaften Ausgestaltungsform der Erfindung ist der Lenkwinkelsensor koaxial zu der vertikalen Schwenkachse an dem Lenkachskörper angeordnet. Hierdurch kann in einfacher Weise die Lenkbewegung des gelenkten Rades von dem Lenkwinkelsensor der Odometriesensorik erfasst werden ohne zusätzliche Getriebeeinrichtungen zu benötigen.

Gemäß einer vorteilhaften Ausgestaltungsform der Erfindung erfasst der Drehzahlsensor die Raddrehzahl und/oder die Radumdrehungen des gelenkten Rades und/oder die Fahrgeschwindigkeit mit Performancelevel d und übermittelt diese mittels einer sicherheitsgerichteten Datenübertragung, insbesondere CANopen Safety, an die Odometrieanlage.

Gemäß einer vorteilhaften Ausgestaltungsform der Erfindung erfasst der Lenkwinkelsensor den Lenkwinkel des gelenkten Rades mit Performancelevel d und übermittelt diesen mittels einer sicherheitsgerichteten Datenübertragung, insbesondere CANopen Safety, an die Odometrieanlage.

Die Erfindung weist eine Reihe von Vorteilen auf.

Die Anordnung des Drehzahlsensors der Odometriesensorik an der Lenkachse ermöglicht die Bereitstellung der zur Automatisierung des Gabelstaplers notwendigen Odometriedaten Fahrstrecke und Fahrgeschwindigkeit in optimaler Qualität, da an dem gelenkten Rad der Schlupf gering ist.

Die Anordnung des Drehzahlsensors und des Lenkwinkelsensors der Odometriesensorik an der Lenkachse ermöglicht eine bauraumgünstige Anordnung der Odometriesensorik ohne die Fahrzeugaußenkontur zu verändern oder die Außenabmessungen des Gabelstaplers zu vergrößern.

Die Anordnung des Drehzahlsensors und des Lenkwinkelsensors der Odometriesensorik an der Lenkachse ermöglicht weiterhin eine einfache Nachrüstung der Odometriesensorik zur Erfassung der Odometriedaten an einem bestehenden manuell bedienten Gabelstapler, um diesen auf einen autonomen oder automatisierten Gabelstapler umzurüsten.

Die bis zu drei Sensoren (zwei Drehzahlsensoren an den gelenkten Rädern; ein Lenkwinkelsensor) der Odometriesensorik können bevorzugt die Fahrgeschwindigkeit und/oder Weg/Drehzahl bzw. den Lenkwinkel mit Performancelevel d erfassen.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Gabelstapler in einer Seitenansicht,
- Figur 2: die Lenkachse des Gabelstaplers der Figur 1 in einer perspektivischen Darstellung,
- Figur 3: einen Schnitt entlang der Linie A-A der Figur 2,
- Figur 4: einen Schnitt entlang der Linie B-B der Figur 2 und
- Figur 5: einen Ausschnitt der Figur 3 in einer vergrößerten Darstellung.

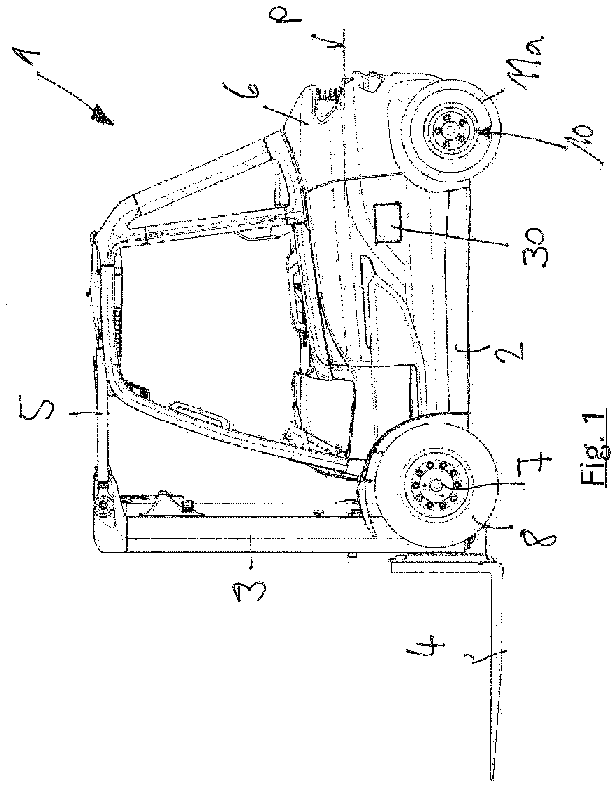

In der Figur 1 ist ein erfindungsgemäßer Gabelstapler 1 in einer Seitenansicht dargestellt. Der Gabelstapler 1 ist im dargestellten Ausführungsbeispiel als Gegengewichtsgabelstapler ausgebildet.

Der erfindungsgemäße Gabelstapler 1 ist als autonomer bzw. automatisierter und somit fahrerloser Gabelstapler ausgebildet, der ohne Fahrer Arbeitsfunktionen und Fahrfunktionen ausführt.

Der Gabelstapler 1 weist einen Fahrzeugkörper 2 auf, der einen Fahrzeugrahmen umfasst. An der Frontseite des Fahrzeugkörpers 2 ist ein Hubgerüst 3 angeordnet, an dem ein Lastaufnahmemittel 4 mittels eines Hubantriebs anhebbar und absenkbar angeordnet ist. Das Hubgerüst 3 kann mittels eines Neigeantriebs 5 nach vorne und hinten geneigt werden.

Die Heckseite des Gabelstaplers 1 umfasst ein Gegengewicht 6.

Im frontseitigen Bereich des Fahrzeugkörpers ist eine Antriebsachse 7 angeordnet, die zwei Antriebsräder 8 umfasst. Die Antriebsräder 8 sind nicht gelenkt.

Im Bereich des Gegengewichts 6 ist der Gabelstapler 1 mit einer Lenkachse 10 versehen, die mindestes ein gelenktes Rad 11a, 11b umfasst. Die gelenkten Räder 11a, 11b sind nicht angetrieben.

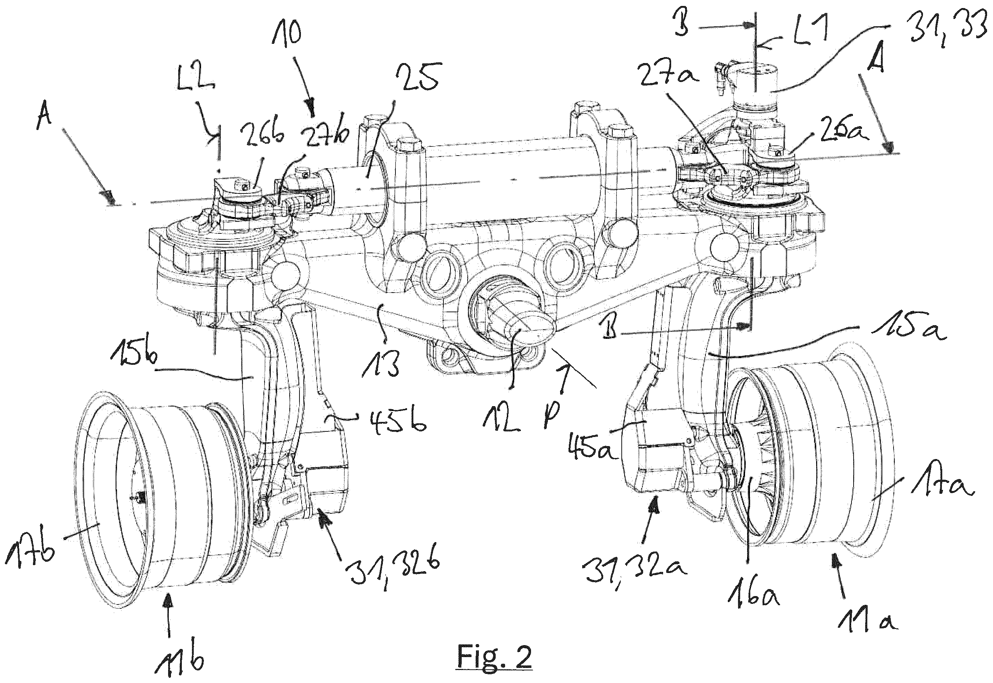

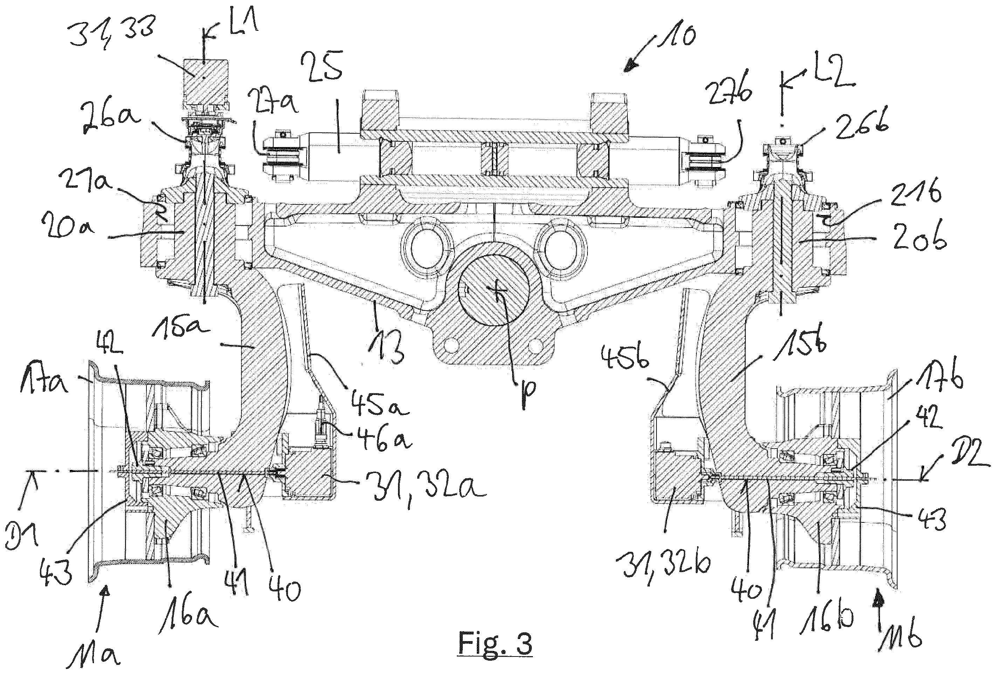

Die Lenkachse 10 ist - wie in den Figuren 2 und 3 näher dargestellt ist - als Drehschemel-Pendelachse ausgebildet und weist einen Lenkachskörper 13 auf, der mittels Zapfen 12 um eine in Fahrzeuglängsrichtung angeordnete Achse P pendelnd am Gegengewicht 6 aufgehängt ist.

Die Lenkachse 10 weist im dargestellten Ausführungsbeispiel zwei gelenkte Räder 11a, 11b auf.

An den beiden Enden des Lenkachskörper 13 ist jeweils ein als Drehschemel ausgebildeter Achsschenkel 15a, 15b um eine vertikale Schwenkachse L1, L2 am Lenkachskörper 13 drehbar gelagert. Die Achsschenkel 15a, 15b sind hierzu im oberen Bereich mit jeweils einem Lagerzapfen 20a, 20b versehen, der mittels nicht näher dargestellter Lager, beispielsweise Kegelrollenlager, in einer als Durchgangsbohrung ausgebildeten Aufnahmebohrung 21a, 21b des Lenkachskörpers 13 um die vertikale Schwenkachse L1 bzw. L2 drehbar gelagert sind.

An dem unteren Ende des Achsschenkels 15a ist fahrzeugaußenseitig eine Radnabe 16a um eine horizontale Drehachse D1 drehbar angeordnet, an der eine Radfelge 17a des gelenktes Rades 11a befestigt ist.

An dem unteren Ende des Achsschenkels 15b ist fahrzeugaußenseitig eine Radnabe 16b um eine horizontale Drehachse D2 drehbar angeordnet, an der eine Radfelge 17b des gelenktes Rades 11b befestigt ist.

Zum Lenken der beiden Achsschenkel 15a, 15b ist an der Oberseite des Lenkachskörpers 13 ein Lenkantrieb 25 angeordnet. Der Lenkantrieb 25 ist im dargestellten Ausführungsbeispiel als Lenkzylinder ausgebildet.

An der Oberseite der Achsschenkel 15a, 15b sind an deren Lagerzapfen 20a, 20b jeweils ein Lenkhebel 26a, 26b drehfest befestigt.

Die beiden Enden des Lenkantriebs 25 sind jeweils mittels eines Lenkschubhebels 27a, 27b mittels Verbindungsbolzen mit dem entsprechenden Lenkhebel 26a bzw. 26b gelenkig verbunden.

Der autonome oder automatisierte Gabelstapler 1 weist eine Odometrieanlage 30 auf, die die Position und Orientierung des Gabelstaplers 1 bestimmt. Die Odometrieanlage 30 umfasst eine Odometriesensorik 31.

Die Odometriesensorik 31 umfasst mindestens einen an der Lenkachse 10 angeordneten, die Raddrehzahl und/oder die Radumdrehungen des gelenkten Rades 11a bzw. 11b erfassenden Drehzahlsensor 32a, 32b und/oder einen an der Lenkachse 10 angeordneten, den Lenkwinkel des gelenkten Rades 11a bzw. 11b erfassenden Lenkwinkelsensor 33 umfasst.

Die Drehzahlsensoren 32a bzw. 32b erfassen bevorzugt die Fahrgeschwindigkeit und/oder Weg/Drehzahl mit Performancelevel d.

Der Lenkwinkelsensor 33 erfasst bevorzugt den Lenkwinkel mit Performancelevel d.

Im dargestellten Ausführungsbeispiel sind an der Lenkachse 10 für jedes gelenkte Rad 11a, 11b ein Drehzahlsensor 32a, 32b vorgesehen.

In den Figuren 2 bis 5 ist der Aufbau der Lenkachse 10 mit der von den beiden Drehzahlsensoren 32a, 32b und dem Lenkwinkelsensor 33 gebildeten Odometriesensorik 31 näher dargestellt.

Wie aus den Figuren 2 und 3 näher ersichtlich ist, ist an dem Achsschenkel 15a fahrzeuginnenseitig und somit gegenüberliegend zu der Radnabe 16a der Drehzahlsensor 32a angeordnet. Entsprechend ist an dem Achsschenkel 15b fahrzeuginnenseitig und somit gegenüberliegend zu der Radnabe 16b der Drehzahlsensor 32b angeordnet.

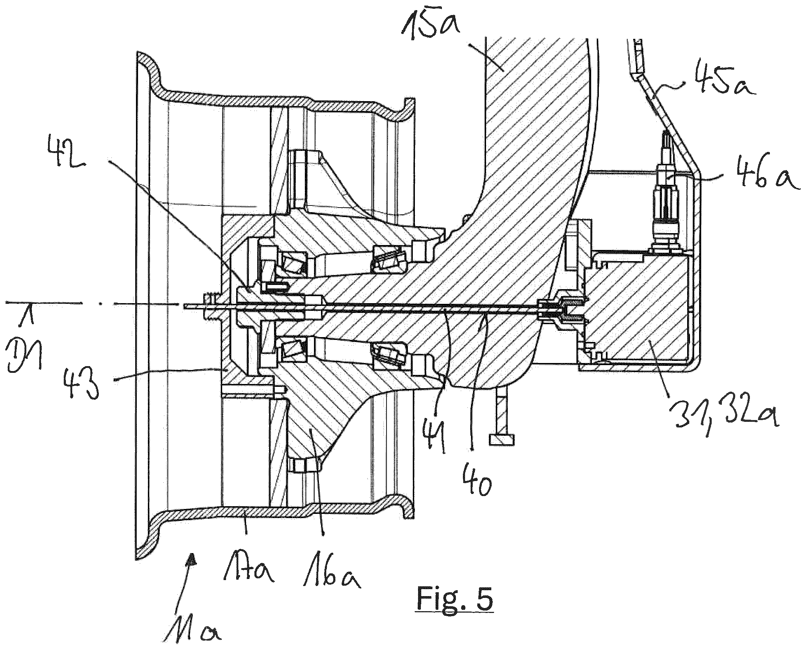

In der Figur 5 ist der Aufbau des Achsschenkels 15a mit dem an der fahrzeuginnenseitigen Seite des Achsschenkels 15a angeordneten Drehzahlsensor 32a in einer vergrößerten Darstellung dargestellt. Der Aufbau des Achsschenkels 15b mit dem an der fahrzeuginnenseitigen Seite des Achsschenkels 15b angeordneten Drehzahlsensor 32b weist einen identischen Aufbau auf.

Der Achsschenkel 15a bzw. 15b ist jeweils mit einer koaxial zur horizontalen Drehachse D1 bzw. D2 angeordneten Durchgangsbohrung 40 versehen. In der Durchgangsbohrung 40 ist eine Welle 41 drehbar angeordnet, die mit der Radnabe 16a bzw. 16b drehgekoppelt ist und mit dem Drehzahlsensor 32a bzw. 32b in Wirkverbindung steht.

Im dargestellten Ausführungsbeispiels ist in die Durchgangsbohrung 40 eine Befestigungsschraube 42 eingeschraubt, mittels der eine Kegelrollenlager umfassende Lagerung der Radnabe 16a bzw. 16b auf dem Achsschenkel 15a bzw. 15b vorspannbar ist. An der Außenseite der Radnabe 16a bzw. 16b ist ein Deckel 43 angeordnet, der mit der Radnabe 16a bzw. 16b drehfest verbunden ist.

Die Durchgangsbohrung 40 erstreckt sich jeweils ebenfalls durch die Befestigungsschraube 42 und den Deckel 43. Die Welle 41 ist mit dem Deckel 43 drehfest verbunden.

Die Rotationsbewegung der Felge 17a bzw. 17b des gelenkten Rades 11a bzw. 11b wird mittels des Deckels 43, der mit der Radnabe 16a bzw. 16b drehfest verbunden ist, auf die Welle 41 übertragen. Die Welle 41 ist durch die Durchgangsbohrung 40 zur fahrzeuginnenseitigen Seite des Achsschenkels 15a bzw. 15b geführt, wo der Drehzahlsensor 32a bzw. 32b am Achssenkel 15a bzw. 15b angeordnet ist. Der Drehzahlsensor 32 bzw. 32b ist mit der Welle 41 in nicht näher dargestellter Weise verbunden, um die Rotationsbewegung der Welle 41 um die Drehachse D1 bzw. D2 zu erfassen.

Um Toleranzen ausgleichen zu können, kann zwischen der Welle 41 und dem jeweiligen Drehzahlsensor 32a bzw. 32b eine näher dargestellte Ausgleichskupplung vorgesehen sein.

Im dargestellten Ausführungsbeispiel ist der Drehzahlsensor 32a koaxial zu der horizontalen Drehachse D1 am Achsschenkel 15a angeordnet. Entsprechend ist der Drehzahlsensor 32b koaxial zu der horizontalen Drehachse D2 am Achsschenkel 15b angeordnet.

An der fahrzeuginnenseitigen Seite des Achsschenkels 15a ist eine Abdeckung 45a angeordnet, innerhalb der der Drehzahlsensor 32a und eine mit dem Drehzahlsensor 32a verbundene Verkabelung 46a angeordnet ist. Entsprechend ist an der fahrzeuginnenseitigen Seite des Achsschenkels 15b ist eine Abdeckung 45b angeordnet, innerhalb der der Drehzahlsensor 32b und eine mit dem Drehzahlsensor 32b verbundene Verkabelung angeordnet ist.

Der Lenkwinkelsensor 33 ist an der Oberseite des Lenkachskörper 13 angeordnet und erfasst im dargestellten Ausführungsbeispiel dem Lenkwinkel des Achsschenkels 15a um die vertikale Schwenkachse L1.

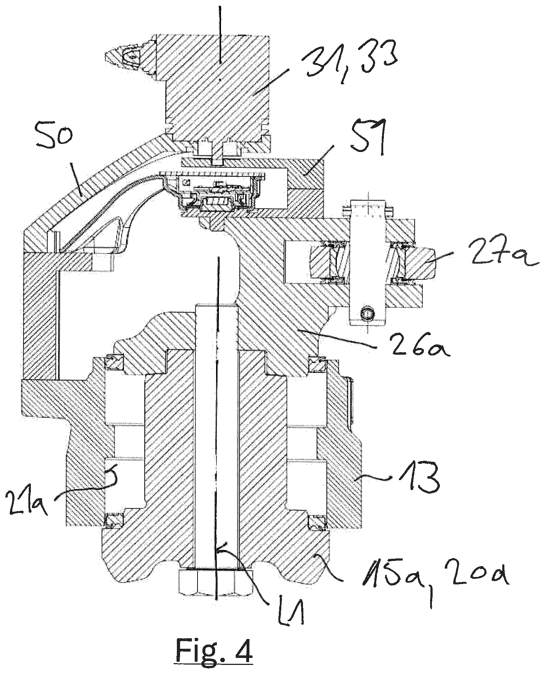

Der Lenkwinkelsensor 33 ist - wie in der Figur 4 näher ersichtlich ist - an einem Halter 50 befestigt, der am Lenkachskörper 13 befestigt ist. Der Lenkwinkelsensor 33 steht im dargestellten Ausführungsbeispiel zur Erfassung des Lenkwinkels des Achsschenkels 15a mit dem am Achsschenkel 15a drehfest befestigten Lenkhebel 26a in Wirkverbindung steht.

An der Oberseite des Lenkhebels 26a ist hierzu ein Mitnehmer 51 befestigt, der mit dem am Halter 50 befestigten Lenkwinkelsensor 33 verbunden ist und die Drehbewegung des Lenkhebels 26a und somit die Drehbewegung des Achsschenkels 15a um die vertikale Schwenkachse L1 auf den Lenkwinkelsensor 33 überträgt.

Der Lenkwinkelsensor 33 ist im dargestellten Ausführungsbeispiel koaxial zu der vertikalen Schwenkachse L1 an dem Lenkachskörper 13 angeordnet.

Der Lenkwinkelsensor 33 ist somit koaxial zur Schwenkachse L1 mittels des Halters 50 an der Oberseite des Lenkachskörpers 13 angeordnet, wobei die Lenkbewegung des Achsschenkels 15a mittels des Lenkhebels 26a und des am Lenkhebel 26a befestigten Mitnehmers 51 auf den Lenkwinkelsensor 3 überragen wird.

Um Toleranzen ausgleichen zu können, kann der Mitnehmer 51 über eine nicht näher dargestellte Ausgleichskupplung mit dem Lenkwinkelsensor 33 verbunden sein.

Die Drehzahlsensoren 32a, 32b übermitteln die Fahrgeschwindigkeit bzw. den Weg / Drehzahl bevorzugt mittels einer sicherheitsgerichteten Datenübertragung, beispielsweise CANopen Safety, an die Odometrieanlage 30.

Der Lenkwinkelsensor 33 übermittelt den Lenkwinkel bevorzugt mittels einer sicherheitsgerichteten Datenübertragung, beispielsweise CANopen Safety, an die Odometrieanlage 30.

## Patentansprüche

1. Gabelstapler (1), insbesondere autonomer oder automatisierter Gabelstapler, mit einem Fahrzeugkörper (2), einer Antriebsachse (7) und einer mindestens ein gelenktes Rad (11a; 11b) umfassenden Lenkachse (10), wobei der Gabelstapler (1) mit einer Odometrieanlage (30) zur Bestimmung der Position und Orientierung des Gabelstaplers (1) versehen ist, die eine Odometriesensorik (31) umfasst, **dadurch gekennzeichnet, dass** die Odometriesensorik (31) mindestens einen an der Lenkachse (10) angeordneten, die Raddrehzahl und/oder die Radumdrehungen des gelenkten Rades (11a; 11b) erfassenden Drehzahlsensor (32a; 32b) und/oder einen an der Lenkachse (10) angeordneten, den Lenkwinkel des gelenkten Rades (11a; 11b) erfassenden Lenkwinkelsensor (33) umfasst.

2. Gabelstapler (1) nach Anspruch 1, **dadurch gekennzeichnet, dass** die Lenkachse (10) zwei lenkbare Räder (11a, 11b) aufweist, wobei jedem gelenkten Rad (11a, 11b) ein Drehzahlsensor (32a, 32b) zugeordnet ist.

3. Gabelstapler (1) nach Anspruch 1 oder 2, **dadurch gekennzeichnet, dass** die Lenkachse (10) einen Lenkachskörper (13) aufweist, an dem mindestens ein um eine vertikale Schwenkachse (L1; L2) verschwenkbaren Achsschenkel (15a; 15b) angeordnet ist, wobei an dem Achsschenkel (15a; 15b) fahrzeugaußenseitig eine Radnabe (16a; 16b), an der das gelenkte Rad (11a; 11b) befestigbar ist, um eine horizontale Drehachse (D1; D2) drehbar gelagert ist, wobei an dem Achsschenkel (15a; 15b) fahrzeuginnenseitig der Drehzahlsensor (32a; 32b) angeordnet ist.

4. Gabelstapler (1) nach Anspruch 3, **dadurch gekennzeichnet, dass** der Achsschenkel (15a; 15b) mit einer koaxial zur horizontalen Drehachse (D1; D2) angeordneten Durchgangsbohrung (40) versehen ist, wobei in der Durchgangsbohrung (40) eine Welle (41) drehbar angeordnet ist, die mit der Radnabe (16a; 16b) drehgekoppelt ist und mit dem Drehzahlsensor (32a; 32b) in Wirkverbindung steht.

5. Gabelstapler (1) nach Anspruch 3 oder 4, **dadurch gekennzeichnet, dass** der Drehzahlsensor (32a; 32b) koaxial zu der horizontalen Drehachse (D1; D2) am Achsschenkel (15a; 15b) angeordnet ist.

6. Gabelstapler (1) nach einem der Ansprüche 3 bis 5, **dadurch gekennzeichnet, dass** an dem Achsschenkel (15a; 15b) eine Abdeckung (45a; 45b) angeordnet ist, innerhalb der der Drehzahlsensor (32a; 32b) und eine mit dem Drehzahlsensor (32a; 32b) verbundene Verkabelung (46a) angeordnet ist.

7. Gabelstapler (1) nach einem der Ansprüche 1 bis 6, **dadurch gekennzeichnet, dass** der Lenkwinkelsensor (33) an dem Lenkachskörper (13) angeordnet ist und ausgebildet ist, den Lenkwinkel des Achsschenkels (15a) um die vertikale Schwenkachse (L1) zu erfassen.

8. Gabelstapler (1) nach Anspruch 7, **dadurch gekennzeichnet, dass** der Achsschenkel (15a) mit einem Lenkhebel (26a), der mit einem Lenkantrieb (25) trieblich verbunden ist, drehfest gekoppelt ist, wobei der Lenkwinkelsensor (33) zur Erfassung des Lenkwinkels des Achsschenkels (15a) mit dem Lenkhebel (26a) in Wirkverbindung steht.

9. Gabelstapler (1) nach Anspruch 7 oder 8, **dadurch gekennzeichnet, dass** der Lenkwinkelsensor (33) koaxial zu der vertikalen Schwenkachse (L1) an dem Lenkachskörper (13) angeordnet ist.

10. Gabelstapler (1) nach einem der Ansprüche 1 bis 9, **dadurch gekennzeichnet, dass** der Drehzahlsensor (32a; 32b) die Raddrehzahl und/oder die Radumdrehungen des gelenkten Rades (11a; 11b) und/oder die Fahrgeschwindigkeit mit Performancelevel d erfasst und mittels einer sicherheitsgerichteten Datenübertragung, insbesondere CANopen Safety, an die Odometrieanlage (30) übermittelt und/oder dass der Lenkwinkelsensor (33) den Lenkwinkel des gelenkten Rades (11a; 11b) mit Performancelevel d erfasst und mittels einer sicherheitsgerichteten Datenübertragung, insbesondere CANopen Safety, an die Odometrieanlage (30) übermittelt.
